(19) Europäisches Patentamt
European Patent Office
Office européen des brevets

(11) **EP 2 375 578 A1**

(12) **EUROPÄISCHE PATENTANMELDUNG**

(43) Veröffentlichungstag:
**12.10.2011 Patentblatt 2011/41**

(51) Int Cl.:
***H04B 3/56*** *(2006.01)*

(21) Anmeldenummer: **10159540.3**

(22) Anmeldetag: **09.04.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **aizo group ag**
**8952 Schlieren (CH)**

(72) Erfinder:
 • **Bröckmann, Eckhard**
  **35418 Buseck (DE)**
 • **Beck, Wilfried**
  **65193 Wiesbaden (DE)**
 • **Kemmler, Wolfgang**
  **56567 Neuwied (DE)**

(74) Vertreter: **Hepp Wenger Ryffel AG**
**Friedtalweg 5**
**9500 Wil (CH)**

(54) **Verfahren zur Datenübertragung von einem Sender zu einem Empfänger in einem Wechselspannungsnetz sowie Vorrichtung zur Datenübertragung für Wechselspannungsnetze**

(57)   Verfahren zur Datenübertragung von einem Sender (1) zu einem Empfänger (2) in einem Wechselspannungsnetz mit einem Verteiler (3) und mindestens einer Verbrauchergruppe (4) mit einem oder mehreren Verbrauchern (5), wobei der Sender (1) mittels einer Stromquelle (6) dem Wechselspannungsnetz ein Signal einspeist.

Fig. 3

EP 2 375 578 A1

**Beschreibung**

Die vorliegende Erfindung betrifft ein Verfahren zur Datenübertragung von einem Sender zu einem Empfänger in einem Wechselspannungsnetz sowie Vorrichtung hierfür.

Aus dem Stand der Technik sind verschiedene Verfahren zur Datenübertragung in einem Wechselspannungsnetz bekannt. So beschreibt beispielsweise US5491463 ein Power Line Communication (PLC) Verfahren zum individuellen Ansteuern von Geräten, wobei Adress- und Steuerdaten während der Nulldurchgänge der Versorgungs-Wechselspannung übertragen werden. Von Nachteil ist dabei, dass bei diesem Verfahren jeweils ein eigener 120kHz-Generator erforderlich ist, um Burst-Signale zu erzeugen und der Empfänger mit vergleichsweise aufwendigen Detektor-Schaltungen ausgestattet sein muss. Ausserdem sind grosse Parallelkapazitäten für eine optimale Übertragung schädlich.

Aus EP1134910A2 ist ein Verfahren bekannt, das über verschieden lange Nullschaltungen oder Austastungen der Versorgungsspannungen verschiedene Bit-Arten definiert und es dem Empfänger mit einer einfachen Schaltung ermöglicht, die Bit-Arten zu detektieren und die jeweiligen Steuerinformationen auszuwerten. Bei diesem Datenübertragungsverfahren ist es technisch möglich, Informationen an mehrere, an eine gemeinsame Wechselspannungsversorgung angeschlossene Verbraucher zu übertragen, indem um den Nulldurchgang der Spannung eine Leitungsunterbrechung bzw. Austastung erfolgt. Systembedingt dürfen die Verbraucher hierbei jedoch keine induktiven oder kapazitiven Lastanteile besitzen, da diese die beschriebene Spannungsaustastung im Nulldurchgang der Spannungskurve stören würden.

WO2006034866A1 beschreibt ein Verfahren zur Modulation der Wirkleistung bei einem oder mehreren Verbrauchern in einem Wechselspannungsenergieversorgungsnetz zwecks Übermittlung von Informationen über die Energieversorgungsleitung durch gezielt variierte Wirkleistung im angeschlossenen Verbraucher. Zur Übermittlung der Informationen werden Variationen des Momentanwertes der Wirkleistung auf ein beliebiges Mass (Vergrösserung oder Verkleinerung) durchgeführt, die von einem Sender in die Wechselstromenergieversorgungsleitung eingeprägt wird und von einem Empfänger ausgewertet werden. Dieses Verfahren erzwingt einen hohen technischen Aufwand im Modulator.

In EP1675274A1 wird ein Verfahren zur Datenübertragung durch Modulation in einem Wechselspannungsnetz mit mehreren angeschlossenen Verbrauchern gezeigt. Dabei werden Blindstromanteile in einer Energieversorgungsleitung eines Wechselspannungsnetzes von einer speziellen elektronischen Schaltung, durch Aufschalten einer speziellen Last abgeleitet. Ein solches Verfahren ist jedoch nur im Hinkanal, also vom Verteiler in Richtung zum Verbraucher möglich.

Es ist Aufgabe der Erfindung, die Nachteile des Standes der Technik zu überwinden. Insbesondere soll ein einfach zu realisierendes Verfahren zur Datenübertragung im Rückkanal, sowie eine entsprechende Vorrichtung zur Verfügung gestellt werden.

Diese Aufgabe wird durch das im unabhängigen Patentanspruch 1 definierten Verfahren sowie durch die im unabhängigen Patentanspruch 8 definierte Vorrichtung gelöst. Weitere Ausführungsformen ergeben sich aus den abhängigen Patentansprüchen.

Eine Verbrauchergruppe im vorliegenden Sinne ist in einem Gebäudestromnetz ausgehend vom Netzzugang derjenige Anteil des Gebäudestromnetzes, welcher vom Verteile abzweigt und zu einem oder mehreren Verbrauchern führt. Beispielsweise umfasst eine Verbrauchergruppe alle Netzsteckdosen sowie die Lampen eines Raumes. Meist verfügt jede Verbrauchergruppe über eine eigene Sicherung, so dass im Schadensfall nur ein Netzausfall in der entsprechenden Verbrauchergruppe auftritt und nicht das gesamte Gebäude vom Netz getrennt wird.

Unter einem Sender wird im Folgenden eine Vorrichtung verstanden, welche ein Signal einem Übertragungsmedium, im vorliegenden Fall einer Zwei- bzw. Dreidrahtleitung eines Wechselstromnetzes übergibt, so dass dieses Signal von einem entsprechenden Empfänger aufgenommen werden kann. Obwohl im vorliegenden Fall immer die Begriffe Sender und Empfänger verwendet werden, kann ein Sender neben seiner Sendefunktionalität auch über Mittel verfügen, so dass auch der Sender Signale empfangen kann. Entsprechend kann auch der Empfänger so ausgestaltet sein, dass dieser Signale sendet bzw. dem Übertragungsmedium übergibt. Durch diese Funktionalität kann nicht nur eine Datenübertragung in eine Richtung erfolgen, sondern es ist eine bidirektionale Kommunikation möglich. In herkömmlichen Gebäudestromnetzen ist jedoch mit der vorliegenden Erfindung nur ein Senden bzw. Empfangen in einer Richtung möglich. Insbesondere weil der Empfänger im Wesentlichen aus einem Widerstand besteht, muss dieser Widerstand in den Stromkreis eingeschleift werden, was lastseitig nicht möglich ist. Falls eine bidirektionale Kommunikation ermöglicht werden soll, kann die vorliegende Erfindung mit einem anderen Sende-Empfangs-Verfahren kombiniert werden.

Hier und im Folgenden wird unter Strom-FSK-Modulation eine Signalmodulation verstanden, welche ähnlich der bekannten Frequency Shift Keying Modulation (FSK-Modulation) ist, jedoch an Stelle einer Spannung einen Strom moduliert. Ausserdem weist das Frequenzsignal nicht eine Sinus-Form auf und wird nicht um den Nullpunkt moduliert. Das Signal hat vielmehr eine $Sin^2$-Form und schwingt damit nicht um den Nullpunkt sondern um Vpp/2. Entsprechend wird unter einem Strom-FSK-Modulator eine Vorrichtung verstanden, welcher ein Signal mittels Strom-FSK-Modulation moduliert.

Im Folgenden wird der Begriff nah so verstanden, dass er in Relation zu einer Länge der Wechselstromleitung einer Verbrauchergruppe betrachtet werden soll. Solche Wechselstromleitungen in einer Hausinstallation können bis zu ca. 100m betragen. Der Begriff nah ist dabei so zu verstehen, dass er einige cm umfasst.

In einem erfindungsgemässen Verfahren zur Datenübertragung von einem Sender zu einem Empfänger in einem Wechselspannungsnetz speist der Sender mittels einer Stromquelle dem Wechselspannungsnetz ein Signal ein. Dabei umfasst das Wechselspannungsnetz einen Verteiler und mindestens eine Verbrauchergruppe mit einem oder mehreren Verbrauchern. Dadurch, dass das Signal mittels einer Stromquelle eingespeist wird und somit als Stromsignal dem Wechselspannungsnetz aufgezwungen wird, kann eine sehr einfache Detektion des Signales erfolgen. Ausserdem erlaubt dies eine Einspeisung, welche unabhängig von der Phasenlage der Wechselspannung ist, da keine Spannungswerte berücksichtigt werden müssen. Einzig im Nulldurchgang der Netzspannung kann nicht gesendet werden, da hier keine Spannung zur Verfügung steht. Es hat sich als vorteilhaft erwiesen, wenn die Stromimpulse mit dem Nulldurchgang der Netzspannung synchronisiert werden. Somit kann auf eine komplizierte Erkennung des Anfangs eines Signals bzw. eines Bits verzichtet werden, ohne dass die Störsicherheit des Systems beeinträchtigt wird. Der Empfänger weiss genau, wann ein Signal zu erwarten ist. Insbesondere können über einen Timer bestimmte Sendefenster definiert werden. Mit dem Nulldurchgang der Netzspannung steht also ein Mittel zur Verfügung, welches eine genaue Synchronisation von Sender und Empfänger erlaubt.

In einem 230V Wechselspannungsnetz kann die Stromquelle beispielsweise einen Strom von 200mA liefern. Es versteht sich von selbst, dass auch andere Stromwerte benutzt werden können. Dabei ist die Sendeleistung von den für eine Produktklasse erforderlichen Grenzwerten bezüglich der leitungsgebundenen elektromagnetischen Energien, von der maximal zulässigen Verlustleistung über den Sendetransistor sowie der Dauer der Kommunikation abhängig. Ebenso ist auch eine Anwendung im 115/120V Wechselspannungsnetz möglich.

Durch die Stromquelle kann ein zusätzlicher Verbraucher simuliert werden. Ein zusätzlicher normaler Verbraucher zwingt dem Wechselspannungsnetz ebenfalls ein zusätzliches Stromsignal auf. Der Netzbetreiber kann somit nicht unterscheiden, ob das zusätzliche Stromsignal von einem für die Datenübertragung eingesetzten Sender herrührt oder ob es sich um einen zusätzlichen normalen Verbraucher handelt. Somit sind erheblich weniger Normen und Regelungen einzuhalten, als wenn aktiv eine Sendesignaleinspeisung analog zum PLC-Verfahren erfolgen würde.

Im Prinzip kann mit diesem Verfahren ein Signal von ca. 3kHz bis ca. 10MHz übertragen werden. Selbstverständlich ist dies jedoch abhängig von der Bandweite der eingesetzten Transistoren und den jeweils zu berücksichtigenden gültigen Vorschriften. Es bietet sich insbesondere an, dieses Verfahren im Cenelec "B" Band zu verwenden, also in einem Bereich von 85-120kHz, weil es dort auch mit anderen spannungsgetriebenen Verfahren koexistieren kann und bezüglich Leitungsdämpfung sowie Effizienz und Größe des Saugkreises einen guten Kompromiss eingeht. Es sind jedoch auch Anwendungen im Bereich 8-12kHz denkbar.

Es hat sich als vorteilhaft erwiesen, wenn das Signal im Sender strom-FSK-moduliert wird. Es hat sich gezeigt, dass bei einer Strom-FSK-Modulation die Fehlerwahrscheinlichkeit verringert ist. Wie schon erwähnt ist die Pulsform der Strom-FSK-Modulierung dabei einer $Sin^2$-Schwingung bestmöglich angenähert. Somit kann das aus der Strom-FSK-Modulierung resultierende Oberwellenspektrum möglichst nahe am theoretischen Limit liegen. Dies hat wiederum den Vorteil, dass die maximale Sendeenergie im Empfänger, der möglichst scharf die Sendefrequenzen herausfiltert, nutzbar gemacht wird. Ausserdem wird damit die abgestrahlte HF-Energie ausserhalb der erlaubten Frequenzbänder stark limitiert und kann einfacher innerhalb der gesetzlich vorgeschriebenen Limiten gehalten werden. Es versteht sich von selbst, dass auch andere Modulationsarten, beispielsweise ein Pulslageverfahren, wo ein Bit durch eine Pulsgruppe an einer bestimmten zeitlichen Position signalisiert wird oder ein Einzelpulsverfahren bzw. Pulslängenkodierung, wo ein Puls einem Bit oder mehreren Bits entspricht.

Das Signal kann nahe am oder im Verbraucher eingespeist werden. Durch eine möglichst nahe am Verbraucher angeordnete Einspeisung, insbesondere wenn die Einspeisung direkt im Verbraucher integriert ist, entfallen Verbindungsleitungen vom Verbraucher zum Sender. Dies ist insbesondere dann vorteilhaft, wenn der Sender einen Statusreport über den Zustand des Verbrauchers an den Empfänger übermitteln soll. Insbesondere kann somit direkt überprüft werden, ob der Status des Verbrauchers einem Status entspricht, der dem Verbraucher vorgängig mit einem bestimmten Befehl angegeben worden ist.

Der Sender und der Empfänger können mit Hilfe des Nulldurchganges der Wechselspannung synchronisiert werden. Dadurch, dass sowohl Sender als auch Empfänger auf den Sinus der Wechselspannung synchronisiert sind, wird die Erkennung des Anfangs eines Bits und somit eines Telegrams sehr einfach. Über Timer können definierte Sendefenster bestimmt werden. Da mit dem Sinussignal der Wechselspannung ein präzises Synchronisationssignal im gesamten Kommunikationssystem zur Verfügung steht, lassen sich Sender und Empfänger immer perfekt aufeinander synchronisieren. Das Empfangen der Sendebits wird somit vereinfacht und die Störsicherheit des Systems gleichzeitig erhöht.

Das Einspeisen des Signals kann unabhängig von einem Nulldurchgang der Wechselspannung erfolgen. Theoretisch könnte ununterbrochen, d.h. über die gesamte Phasenlage der Wechselspannung gesendet werden, was zu einer wesentlich höheren Datenübertragungsrate im Vergleich zu anderen Verfahren, welche nur im Nulldurchgang senden können, führen kann. Allerdings kann natürlich nur so lange ein Stromverbrauch stimuliert werden, wie auch eine entsprechende Spannung zur Verfügung steht. Dies bedeutet, dass sehr nahe am Nulldurchgang kein ausreichender Stromimpuls erzeugt werden kann. Im Unterschied hierzu kann ein spannungsgetriebes PLC-System auch während dem Nulldurchgang aus einem Kondensator Energie ziehen, um Spannungsimpulse gegen die Quellimpedanz einzuprägen.

Dadurch, dass das Signal mittels einer Stromquelle eingespeist wird und somit als Stromsignal dem Wechselspannungsnetz aufgezwungen wird, kann eine sehr einfache Detektion des Signales erfolgen. Eine solche Detektion kann beispielsweise durch einen Shunt erfolgen. Über einem solchen Shunt (oder einem Wiederstand) wird also eine Spannung abfallen, welche proportional zum von der Stromquelle aufgezwungenem Strom des Wechselspannungsnetzes ist. Der Empfänger kann somit das Signal mittels eines Shunts aus dem Wechselspannungsnetz auslesen.

Das Signal kann dabei nahe dem Verteiler ausgelesen werden.

Eine erfindungsgemässe Anordnung zur Datenübertragung für Wechselspannungsnetze umfasst ein Wechselspannungsnetz mit einem Verteiler und mindestens einer Verbrauchergruppe mit einem oder mehreren Verbrauchern, mindestens einen Sender und einen Empfänger. Der Sender ist dabei so ausgestaltet, dass er eine Stromquelle zur Einspeisung eines Signals in das Wechselspannungsnetz umfasst.

Der Sender kann dabei im Verbraucher integriert oder nahe am Verbraucher angeordnet sein.

Durch eine möglichst nahe am Verbraucher angeordnete Einspeisung, insbesondere wenn die Einspeisung direkt im Verbraucher integriert ist, entfallen Verbindungsleitungen vom Verbraucher zum Sender. Vorzugsweise ist der Sender direkt im Verbraucher integriert, beispielsweise an seinem Netzeingang. Dies ist insbesondere dann vorteilhaft, wenn der Sender einen Statusreport über den Zustand des Verbrauchers an den Empfänger übermitteln soll. Insbesondere kann somit direkt überprüft werden, ob der Status des Verbrauchers einem Status entspricht, der dem Verbraucher vorgängig mit einem bestimmten Befehl angegeben worden ist.

Der Sender kann einen Strom-FSK-Modulator umfassen. Entsprechend muss natürlich auch der Empfänger über einen Strom-FSK-Demodulator verfügen, so dass eine einwandfreie Kommunikation gewährleistet werden kann. Die Strom-FSK-Modulation hat sich als vorteilhaft erwiesen, da damit die Fehlerwahrscheinlichkeit gegenüber anderen Modulationsarten reduziert werden kann. Wie schon vorgängig erwähnt, sind auch andere Modulationsarten möglich, beispielsweise ein Pulslageverfahren, oder ein Einzelpulsverfahren bzw. eine Pulslängenkodierung.

Der Empfänger kann zum Auslesen des Signals aus dem Wechselspannungsnetz einen Shunt umfassen. Dieser Shunt wird von dem Wechselspannungsnetz vom Sender aufgezwungenen strom-FSK-modulierten Strom durchflossen und erzeugt direkt einen entsprechenden Spannungsabfall über dem Shunt. Dieser Spannungsabfall kann einfach verwendet und weiter verarbeitet werden.

Der Empfänger kann nahe am Verteiler angeordnet sein. Mit einer Anordnung des Empfängers nahe am Verteiler und des Senders nahe am Verbraucher, wobei der Sender und Empfänger der selben Verbrauchergruppe zugeordnet sind, kann beispielsweise eine einfache sternförmige Kommunikationsnetzstruktur, insbesondere für den Rückkanal aufgebaut werden. Eine solche sternförmige Kommunikationsnetzstruktur hat den Vorteil, dass jede Verbrauchergruppe bzw. jeder Stromkreis über einen separaten Kommunikationskanal verfügt, welcher getrennt vom Kommunikationskanal einer weiteren Verbrauchergruppe ist. Somit lässt sich die Bandbreite der Datenübertragung im Gesamtsystem vervielfachen.

Um ein Übersprechen eines Signals vom Sender einer ersten Verbrauchergruppe zum Empfänger einer zweiten Verbrauchergruppe zu unterdrücken, kann der Verteiler einen Saugkreis, insbesondere einen ersten und einen zweiten Serienresonanzkreis aufweisen. Dabei weist der erste Serienresonanzkreis vorzugsweise eine Resonanzfrequenz auf, welche der ersten Strom-FSK-Frequenz entspricht. Ein zweiter Serienresonanzkreis weist dann eine Resonanzfrequenz auf, welche der zweiten Strom-FSK-Frequenz entspricht. Somit können beide Strom-FSK-Frequenzen aktiv geblockt werden und ein Übersprechen in einen weiteren Kommunikationskanal bzw. in eine andere Verbrauchergruppe wird verhindert. Ausserdem wird somit die Empfindlichkeit der Strommessung des Strom-FSK-Signals erhöht, weil dadurch die Quellimpedanz im Frequenzbereich des Senders deutlich reduziert wird und dadurch mehr Spannung am Shunt abfällt. Versuche haben gezeigt, dass an dieser Stelle auch ein einfacher hochspannungsfester Kondensator gut funktioniert. Allerdings erzeugt dieser im System eine unerwünschte Blindleistung, da der Kondensator über den gesamten unteren Frequenzbereich wirksam ist. Durch die Verwendung von realtiv schmalbandigen Saugkreisen wird die Blindleistung auf einen vernachlässigbaren Wert reduziert.

Ein erfindungsgemässer Sender zur Datenübertragung für Wechselspannungsnetze umfasst einen MOS-FET, zum Aufzwingen eines Laststromes auf eine Wechselspannungsnetz und einen Pulserzeuger, zur Erzeugung eine $sin^2$-Signales. In einer alternativen Schaltung kann der Sendern zusätzlich einen Stromspiegel, zum Ansteuern des MOS-FET mit einem modulierten Stromsignal aufweisen. In beiden Fällen ist der Sender parallel zu einem Verbraucher direkt an ein Wechselspannungsnetz anschliessbar und weist insbesondere keinen Koppeltransformator auf. Dadurch, dass auf jegliche Koppeltransformatoren verzichtet werden kann, kann der Sender sehr kompakt gebaut werden. Ausserdem erlauben diese Schaltungen, die Sendeimpulse mit einem einzigen sehr kleinen Transistor zu erzeugen. Der Sender lässt sich somit sehr leicht auf einem Silizium-Chip integrieren oder kann preisgünstig und kompakt in einer elektronischen Baugruppe mit einem Chip kombiniert werden.

Mit einem erfindungsgemässen Gebäudestromnetz umfassend eine oder mehrere der vorgenannten Anordnungen kann wie schon vorgängig beschrieben eine einfache sternförmige Kommunikationsnetzstruktur aufgebaut werden.

Anhand von Figuren, welche lediglich Ausführungsbeispiele darstellen, wird die Erfindung im Folgenden näher erläutert. Es zeigen:

Figur 1:      eine schematische Darstellung einer erfindungsgemässen Anordnung in einem Gebäudestromnetz,

Figur 2:      ein vereinfachtes Ersatzschaltbild einer erfindungsgemässen Anordnung mit zwei Verbrauchergruppen,

Figur 3:      das Ersatzschaltbild aus Figur 2, jedoch mit einem modifizierten Verteiler und einer kapazitiven Last,

Figur 4:      ein Frequenzgang der Ströme an beiden Shunts im Cenelec "B" Band aus Figur 3,

Figur 5:      eine Variante eines Doppel-Serienschwingkreises,

Figur 6:      ein Ersatzschaltbild eines erfindungsgemässen Strom-FSK-Senders mit einem Stromspiegel,

Figur 7:      ein Ersatzschaltbild einer alternativen Schaltung eines Strom-FSK-Senders ohne Stromspiegel.

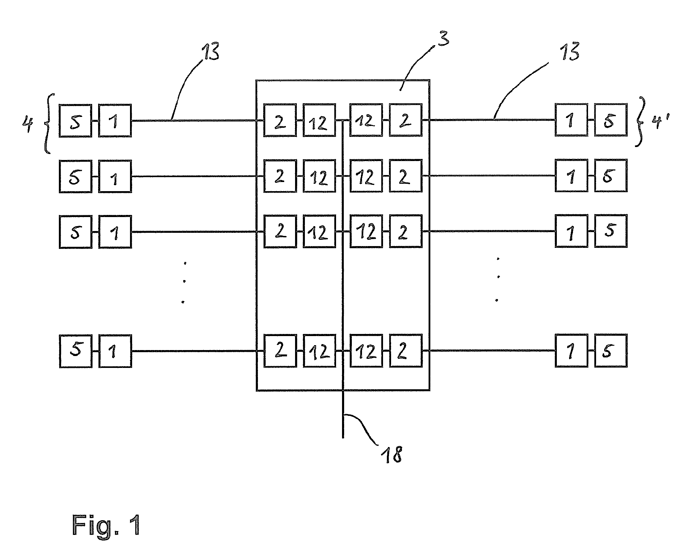

Figur 1 zeigt eine schematische Darstellung einer erfindungsgemässen Anordnung in einem Gebäudestromnetz. Dabei ist an einem Netzzugang 18 ein Verteiler 3 angeschlossen, welcher im Gebäude die Verteilung des Wechselstromes auf die einzelnen Verbrauchergruppen 4, 4' vornimmt. Jede Verbrauchergruppe 4, 4' verfügt über eine Sicherung 12, welche im Störfall eine Trennung der Verbrauchergruppe vom Netz vornimmt. Direkt anschliessend an die Sicherung 12 ist in jeder Verbrauchergruppe 4, 4' ein Empfänger 2 angeordnet, bevor die Netzspannung über eine Leitungen 13 an den Verbraucher 5 geliefert wird. Unmittelbar vor dem Verbraucher 5 ist ein Sender 1 angeordnet, welcher dem Wechselspannungsnetz ein Stromsignal aufdrücken kann. Wenn mehrere Verbraucher 5 in derselben Verbrauchergruppe 4, 4' angeschlossen sind, kann jeder Verbraucher über einen eigenen Sender verfügen.

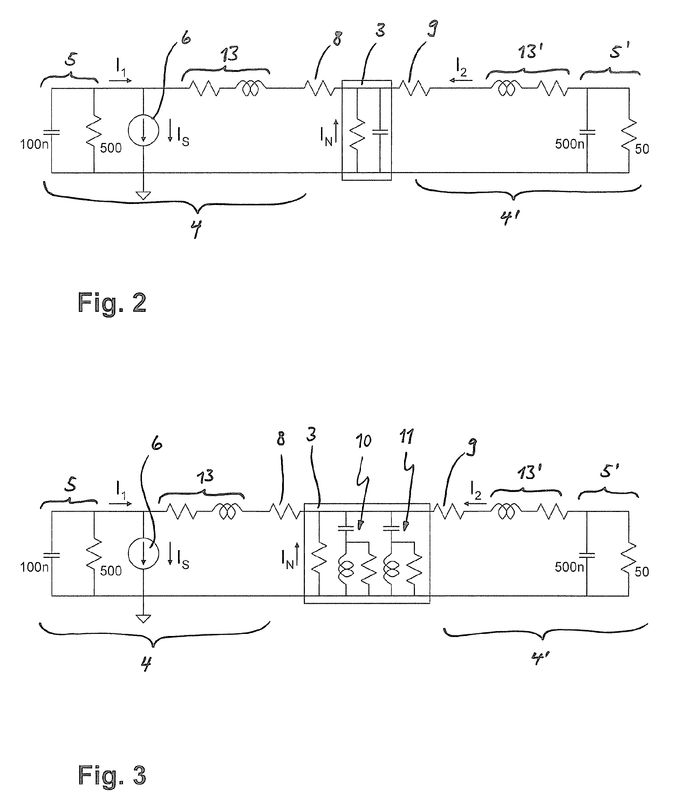

In Figur 2 ist ein vereinfachtes Ersatzschaltbild einer erfindungsgemässen Anordnung mit zwei Verbrauchergruppen 4, 4' und einem Verteiler 3 dargestellt. Die Sicherungen 12 (siehe Figur 1) sind hier nicht eingezeichnet. Entsprechend den Anforderungen der Energieverteilung wird die am Verteiler 3 messbare Netzimpedanz durch einen kleinen Widerstand dargestellt. Wegen der unvermeidlichen Leitungsinduktivitäten zeigt Figur 2 zusätzlich eine Spule in Reihe mit diesem Widerstand, was im Bereich der Strom-FSK-Sendefrequenzen zu einer deutlich größeren Quellimpedanz des Netzes führt.

Dabei wird der Verbraucher 5 der Verbrauchergruppe 4 beispielsweise durch einen Widerstand von $500\Omega$ und eine Kapazität von 100nF nachgebildet. Ein solches Verbrauchermodell entspricht in etwa einer Glühbirne und einem Gerät mit einem Funkentstörkondensator. Der Verbraucher 5' der benachbarten Verbrauchergruppe 4' wird beispielsweise mit $50\Omega$ und 500nF modelliert. Das entspricht dem durchaus realistischen Fall mehrerer eingeschalteter Glühlampen und mehreren Geräten mit Funkentstörkondensatoren.

Die Zuleitung vom Verteiler 3 zum Verbraucher 5, 5' wird durch das Ersatzschaltbild einer Leitung 13, 13' dargestellt. Für eine 20m Leitung entspricht dies in etwa einem Widerstand von $0.7\Omega$ und einer Induktivität von $8\mu H$. Anschliessend an den Verteiler 3 ist in jeder Verbrauchergruppe ein Shunt 8, 9 dargestellt, welcher den Empfänger darstellt. Ein solcher Shunt 8, 9 weist beispielsweise einen Widerstandswert von $0.1\Omega$ auf. Zur Einspeisung eines Signals ist beim Verbraucher 5 eine Stromquelle 6 angeordnet, welche einen Sendestrom $I_s$ mit einem Spitzenwert von ca. 200mA liefert. Diese Stromquelle 6 ist Teil des Senders, welcher ein strom-FSK-moduliertes Stromsignal auf die Leitung 13 aufdrückt. Dieses Stromsignal wird dann vom Shunt 8 des Empfängers detektiert und in eine entsprechende Spannung gewandelt.

Figur 2 zeigt auch die Aufteilung des Sendestroms $I_s$. Unvermeidlich wird ein Teil $I_1$, der nicht über den Shunt 8 des Empfängers fließt, bereits vom eigenen Verbraucher aufgenommen. Der über das Netz fließende Strom IN durchläuft den eigenen Shunt 8. Der in die benachbarte Verbrauchergruppe 4' fließende Strom $I_2$ durchläuft zwar auch den eigenen Shunt 8 aber auch den Shunt 9 der benachbarten Verbrauchergruppe 4'. Da diese Verbrauchergruppe als stark belastet dargestellt wurde und beispielsweise mehrere Lampen und mehrere Funkentstörkondensatoren aufweist, ist der Strom $I_2$ nicht zu vernachlässigen und führt zu unerwünschtem Übersprechen. Dabei gilt:

$$I_S \;=\; I_1 \;+\; I_N \;+\; I_2$$

In Figur 3 sind am Ort des Verteilers zwei Serienresonanzschwingkreise 10 und 11 angebracht. Diese Schwingkreise sind auf die beiden Strom-FSK-Frequenzen abgestimmt. Bei sorgfältiger Bauteileauswahl zur Erzielung hoher Güte verhalten sich die Serienresonanzschwingkreise fast wie Kurzschlüsse bei den Sendefrequenzen. Dadurch sind die Impedanzen von Netz und Verbrauchergruppen nahezu vernachlässigbar. Bei den meist kleinen Leitungsimpedanzen 13 und 13' gilt dann für die Stromaufteilung näherungsweise:

$I_N \approx I_s$ Der über das Netz und den Shunt 8 fließende Strom ist fast so groß wie der Sendestrom.

I1 ≈ 0 Der vom Verbraucher 5 selbst absorbierte Strom ist vernachlässigbar.

I2 ≈ 0 Der in den Nachbarkreis 4' eindringende Strom ist vernachlässigbar. Damit ist Übersprechen unterbunden.

Bei Strom-FSK-Frequenzen von 100kHz bzw. 110kHz können die Serienresonanzkreise durch je eine Kapazität von 470nF und eine Induktivität von $4.45\mu$H bzw. von $5.4\mu$H gebildet werden.

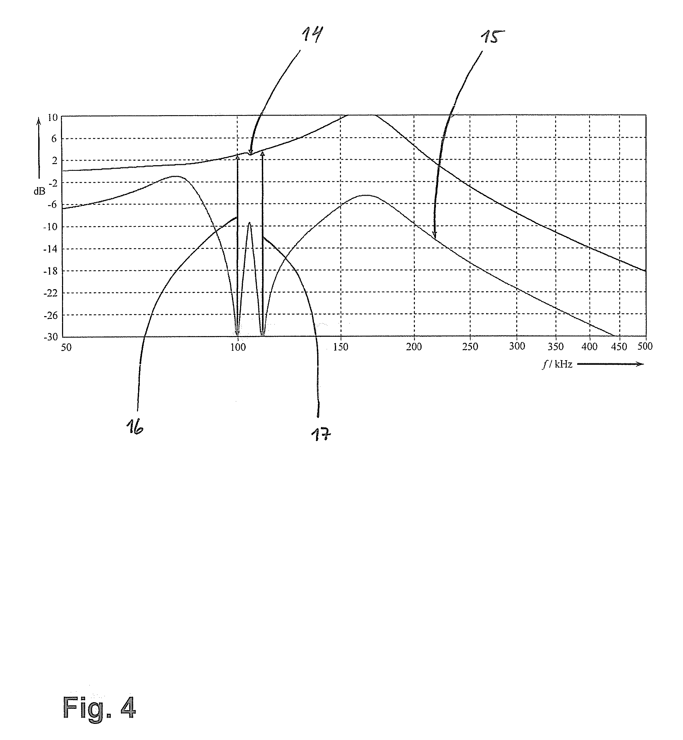

In Figur 4 ist ein Frequenzgang der Ströme an beiden Shunts 8, 9 dargestellt. Dabei stellt der Frequenzgang 14 den Strom im Shunt 8 (siehe Figur 3) und der Frequenzgang 15 den Strom im Shunt 9 (siehe Figur 3) dar. Ebenfalls eingezeichnet sind die beiden Strom-FSK-Frequenzen 16 und 17, welche bei 100kHz bzw. bei 110kHz liegen. Das kurzschluss-ähnliche Verhalten der Serienresonanzschwingkreise bei den Sendefrequenzen ist hier an den spitz zu stark negativen verlaufenden Werten klar erkennbar.

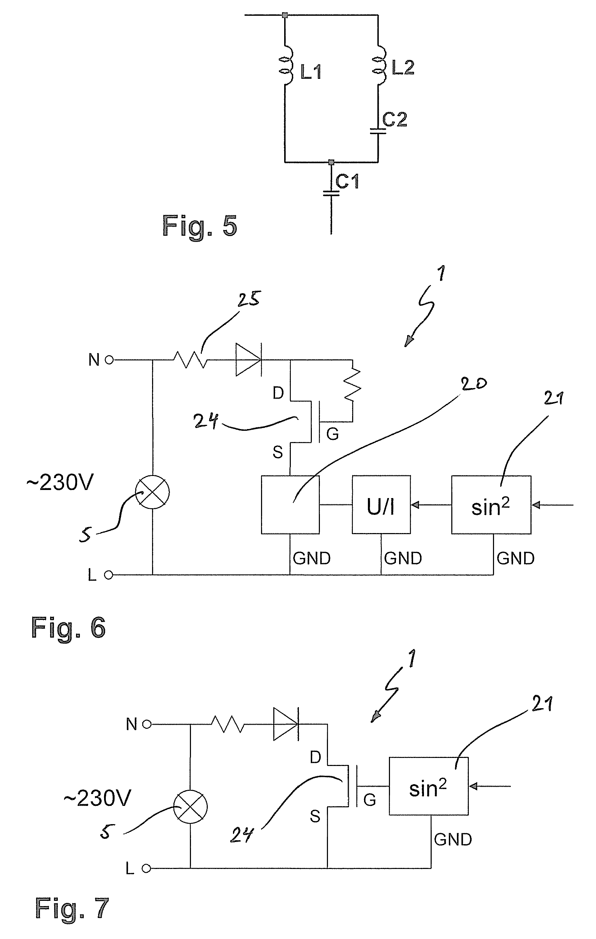

Figur 5 zeigt eine Variante eines Doppel-Serienschwingkreises, bei dem zur Erzielung geringer Bauteilabmessungen nur ein großer Hochvoltkondensator C1 erforderlich ist. Damit sinkt auch der bei der Netzfrequenz entstehende Blindstrom. Der Frequenzgang dieser Schaltung stimmt qualitativ mit Figur 4 überein, er zeigt ebenfalls zwei scharfe Minima bei den Sendefrequenzen. Der Kondensator C2 kann für weitaus niedrigere Spitzenspannungen dimensioniert werden und behält eine kleine Größe. Diese Schaltungsvariante eignet sich für niedrige Sendefrequenzen, bei denen die Strom-FSK-Frequenzen relativ weit auseinander liegen. Anderenfalls ergeben sich bei der Dimensionierungsberechnung unpraktikable Werte für C2 und L2.

Figur 6 zeigt schematisch ein Ersatzschaltbild eines erfindungsgemässen Strom-FSK-Senders 1 mit einem Stromspiegel 20. Dabei ist der Sender 1 parallel zu einem Verbraucher 5, dargestellt durch eine Glühlampe, an das Wechselspannungsnetz, dargestellt durch die beiden ~230V Anschlüsse, angeschlossen. Ausgehend von einem Signal eines Datenkommunikationsausgangs wird durch einen Pulserzeuger 21 ein $Sin^2$-Signal erzeugt, welches dann dem Stromspiegel 20 weitergeleitet wird. Dieser Stromspiegel 20 drückt jetzt ein von einem Strom-FSK-Modulator (nicht gezeigt) entsprechend moduliertes Strom-Signal dem Wechselspannungsnetz über den MOS-FET 24 auf. Ein optionaler Widerstand 25 dient der Strombegrenzung.

Figur 7 zeigt schematisch ein Ersatzschaltbild einer alternativen Schaltung eines erfindungsgemässen Strom-FSK-Senders 1 ohne Stromspiegel. Auch hier ist der Sender 1 parallel zu einem Verbraucher 5, dargestellt durch eine Glühlampe, an das Wechselspannungsnetz, dargestellt durch die beiden ~230V Anschlüsse, angeschlossen. Ausgehend vom FSK Signal eines Datenkommunikationsausgangs wird durch einen Pulserzeuger 21 ein $Sin^2$-Signal erzeugt, welches dann an den Leistungstransistor 24 weitergeleitet wird.

Es versteht sich von selbst, dass anstelle des Strom-FSK-Modulators sowohl in der Schaltung gemäss Figur 6 als auch in der Schaltung gemäss Figur 7 auch ein Modulator für andere Modulationsverfahren eingesetzt werden kann, beispielsweise für ein Pulslageverfahren oder eine Einzelpulsverfahren bzw. eine Pulslängenkodierung.

## Patentansprüche

1. Verfahren zur Datenübertragung von einem Sender (1) zu einem Empfänger (2) in einem Wechselspannungsnetz mit einem Verteiler (3) und mindestens einer Verbrauchergruppe (4) mit einem oder mehreren Verbrauchern (5), wobei der Sender (1) mittels einer Stromquelle (6) dem Wechselspannungsnetz ein Signal einspeist.

2. Verfahren nach Anspruch 1, **dadurch gekennzeichnet, dass** durch die Stromquelle (6) ein zusätzlicher Verbraucher simuliert wird.

3. Verfahren nach einem der vorhergehenden Ansprüche, **dadurch gekennzeichnet, dass** das Signal strom-FSK-moduliert wird.

4. Verfahren nach einem der vorhergehenden Ansprüche, **dadurch gekennzeichnet, dass** das Signal nahe am oder im Verbraucher (5) eingespeist wird.

5. Verfahren nach einem der vorhergehenden Ansprüche, **dadurch gekennzeichnet, dass** der Sender und der Empfänger mit Hilfe des Nulldurchganges der Wechselspannung synchronisiert werden.

6. Verfahren nach einem der vorhergehenden Ansprüche, **dadurch gekennzeichnet, dass** das Einspeisen des Signals unabhängig von einem Nulldurchgang der Wechselspannung erfolgt.

7. Verfahren nach einem der vorhergehenden Ansprüche, **dadurch gekennzeichnet, dass** der Empfänger (2) das Signal mittels eines Shunts (8, 9) aus dem Wechselspannungsnetz ausliest.

8. Verfahren nach einem der vorhergehenden Ansprüche, **dadurch gekennzeichnet, dass** das Signal nahe dem Verteiler (3) ausgelesen wird.

9. Anordnung zur Datenübertragung für Wechselspannungsnetze, umfassend

    - ein Wechselspannungsnetz mit einem Verteiler (3) und mindestens einer Verbrauchergruppe (4) mit einem oder mehreren Verbrauchern (5),
    - mindestens einen Sender (1),
    - einen Empfänger (2),
    wobei der Sender (1) eine Stromquelle (6) zur Einspeisung eines Signals in das Wechselspannungsnetz umfasst.

10. Anordnung nach Anspruch 9, **dadurch gekennzeichnet, dass** der Sender (1) im Verbraucher (5) integriert oder nahe am Verbraucher (5) angeordnet ist.

11. Anordnung nach Anspruch 9 oder 10, **dadurch gekennzeichnet, dass** der Sender (1) einen Strom-FSK-Modulator umfasst.

12. Anordnung nach einem der Ansprüche 9 bis 11, **dadurch gekennzeichnet, dass** der Empfänger einen Shunt (8, 9) zum Auslesen des Signals aus dem Wechselspannungsnetz umfasst.

13. Anordnung nach einem der Ansprüche 9 bis 12, **dadurch gekennzeichnet, dass** der Empfänger (2) nahe am Verteiler (3) angeordnet ist.

14. Anordnung nach einem der Ansprüche 9 bis 13, **dadurch gekennzeichnet, dass** der Verteiler (3) einen Saugkreis ersten und einen zweiten Serienresonanzkreis (10, 11) zur Unterdrückung von Übersprechen des Signals 7 vom Sender (1) einer ersten Verbrauchergruppe (4) zum Empfänger (2) einer zweiten Verbrauchergruppe (4') aufweist.

15. Anordnung nach Anspruch 14, **dadurch gekennzeichnet, dass** ein erster Serienresonanzkreis (10) eine Resonanzfrequenz aufweist, welche der ersten Strom-FSK-Frequenz entspricht.

16. Anordnung nach Anspruch 14 oder 15, **dadurch gekennzeichnet, dass** ein zweiter Serienresonanzkreis (11) eine Resonanzfrequenz aufweist, welche der zweiten Strom-FSK-Frequenz entspricht.

17. Sender (1) zur Datenübertragung für Wechselspannungsnetze umfassend:

    - einen MOS-FET (24), zum Aufzwingen eines Laststromes auf eine Wechselspannungsnetz
    - einen Pulserzeuger (21), zur Erzeugung eine $\sin^2$-Signales,
    wobei der Sender (1) parallel zu einem Verbraucher (5) direkt an ein Wechselspannungsnetz anschliessbar ist und insbesondere keinen Koppeltransformator aufweist.

18. Sender (1) gemäss Anspruch 17, **dadurch gekennzeichnet, dass** der Sender zusätzlich einen Stromspiegel (20), zum Ansteuern des MOS-FET (24) mit einem modulierten Stromsignal, umfasst.

19. Gebäudestromnetz umfassend eine oder mehrere Anordnungen nach einem der Ansprüche 9 bis 16.

Fig. 1

Fig. 2

Fig. 3

Fig. 4

Fig. 5

Fig. 6

Fig. 7

Europäisches
Patentamt

European
Patent Office

Office européen
des brevets

**EUROPÄISCHER RECHERCHENBERICHT**

Nummer der Anmeldung

EP 10 15 9540

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 401 563 A1 (LANDIS & GYR AG [CH]) 23. März 1979 (1979-03-23) | 1-13,19 | INV. H04B3/56 |
| A | * Seite 1 - Seite 7; Abbildungen 1-3 * | 14-18 | |
| | ----- | | |
| X | DE 33 29 049 A1 (FUJI ELECTRIC CO LTD [JP]) 15. März 1984 (1984-03-15) | 1-13,19 | |
| A | * Zusammenfassung; Ansprüche 1-5; Abbildungen 1-5 * * Seite 6, Zeile 1 - Zeile 18 * | 14-18 | |
| | ----- | | |
| X | EP 1 641 178 A1 (BFT SPA [IT]) 29. März 2006 (2006-03-29) | 1-13,19 | |
| A | * Zusammenfassung * * Absätze [0001] - [0005], [0027], [0044] * | 14-18 | |
| | ----- | | |
| A | FR 2 635 424 A1 (TOSHIBA KK [JP]) 16. Februar 1990 (1990-02-16) * das ganze Dokument * | 3,11 | |
| | ----- | | |
| A | US 2009/015319 A1 (TZENG TZU-CHIEN [TW]) 15. Januar 2009 (2009-01-15) * das ganze Dokument * | 17,18 | RECHERCHIERTE SACHGEBIETE (IPC) |
| | ----- | | H04B |

Der vorliegende Recherchenbericht wurde für alle Patentansprüche erstellt

| Recherchenort | Abschlußdatum der Recherche | Prüfer |
|---|---|---|
| München | 30. August 2010 | Bauer, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

EP 2 375 578 A1

**ANHANG ZUM EUROPÄISCHEN RECHERCHENBERICHT
ÜBER DIE EUROPÄISCHE PATENTANMELDUNG NR.**

EP 10 15 9540

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2010

| Im Recherchenbericht angeführtes Patentdokument | | Datum der Veröffentlichung | Mitglied(er) der Patentfamilie | | Datum der Veröffentlichung |
|---|---|---|---|---|---|
| FR 2401563 | A1 | 23-03-1979 | CH | 618553 A5 | 31-07-1980 |
| | | | DE | 2741215 A1 | 08-03-1979 |
| | | | GB | 1603594 A | 25-11-1981 |
| | | | JP | 54036115 A | 16-03-1979 |
| | | | NL | 7808722 A | 27-02-1979 |
| | | | SE | 440432 B | 29-07-1985 |
| | | | SE | 7808961 A | 26-02-1979 |
| | | | US | 4371867 A | 01-02-1983 |
| DE 3329049 | A1 | 15-03-1984 | JP | 1663794 C | 19-05-1992 |
| | | | JP | 3016815 B | 06-03-1991 |
| | | | JP | 59045740 A | 14-03-1984 |
| EP 1641178 | A1 | 29-03-2006 | AT | 347215 T | 15-12-2006 |
| | | | AU | 2005211691 A1 | 13-04-2006 |
| | | | CA | 2520796 A1 | 27-03-2006 |
| | | | CN | 1941017 A | 04-04-2007 |
| | | | DE | 602004003496 T2 | 04-10-2007 |
| | | | ES | 2277665 T3 | 16-07-2007 |
| | | | US | 2006079971 A1 | 13-04-2006 |
| FR 2635424 | A1 | 16-02-1990 | CA | 1303679 C | 16-06-1992 |
| | | | DE | 3925116 A1 | 01-02-1990 |
| | | | GB | 2223382 A | 04-04-1990 |
| | | | JP | 2124659 A | 11-05-1990 |
| | | | JP | 2925158 B2 | 28-07-1999 |
| | | | US | 5016260 A | 14-05-1991 |
| US 2009015319 | A1 | 15-01-2009 | KEINE | | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5491463 A
- EP 1134910 A2
- WO 2006034866 A1
- EP 1675274 A1